# EUROPEAN PATENT APPLICATION

(11) **EP 4 663 306 A1**
(43) Date of publication of application: **17.12.2025**
(21) Application number: 24784567.0
(22) Date of filing: 17.01.2024
(51) Int. Cl.: B05B 16/80, B05B 12/00, B05B 13/04, B05C 11/00, B05C 11/10, B05C 15/00

(54) **PROTECTIVE LAYER FORMING DEVICE AND METHOD FOR OPERATING PROTECTIVE LAYER FORMING DEVICE**

(30) Priority: 07.04.2023 JP 2023062705
(71) Applicant: Mitsubishi Heavy Industries, Ltd., Tokyo 100-8332 (JP)
(72) Inventor: SHIBATA, Masaaki, Tokyo 100-8332 (JP); TAKAYANAGI, Kazufumi, Tokyo 100-8332 (JP); KOREMATSU, Yasuhiro, Tokyo 100-8332 (JP); OKANO, Yasushi, Tokyo 100-8332 (JP); YAMADA, Tomokazu, Tokyo 100-8332 (JP)
(74) Representative: Cabinet Beau de Loménie
(86) International application number: PCT/JP2024/001074
(87) International publication number: WO 2024/209763

(57) **Abstract**

The purpose of the present invention is to reduce the overall size of a protective layer forming device. A protective layer forming device (100) forms a protective layer in an application range of a front edge portion, at the leading end in the blade-length direction, of a windmill blade body (5a) formed of FRP. The protective layer forming device (100) comprises: a booth (140) that surrounds a part, in the blade-length direction, in the application range of the windmill blade body (5a); a spray unit that is provided inside the booth (140) and that sprays an application material to the application range to form the protective layer; a multi-joint robot that moves the spray unit relative to the booth (140) and moves the spray unit to a prescribed position where spraying is performed with respect to the application range of the windmill blade body (5a); and a booth moving mechanism that moves the booth (140) in the blade-length direction of the windmill blade body (5a).

## Description

### Technical Field

The present disclosure relates to a protective layer forming device and a method for operating a protective layer forming device.

### Background Art

As a wind turbine rotor rotates, a wind turbine blade collides with foreign substances (for example, raindrops, dust, and the like) in the air and is eroded, so that erosion occurs on a leading edge side of the wind turbine blade. In order to protect the wind turbine blade from the erosion, it is known to form a protective layer for erosion resistance on a leading edge portion of the wind turbine blade (refer to PTL 1).

### Citation List

### Patent Literature

[PTL 1] Japanese Unexamined Patent Application Publication No. 2022-175830

### Summary of Invention

### Technical Problem

When a protective layer is formed on a wind turbine blade, dust (for example, a powdery construction material) scatters. Therefore, in order to suppress the scattering of dust, it is conceivable to surround the wind turbine blade, which is a target for forming the protective layer, with a booth. However, there is a possibility that a problem may arise in which an entire protective layer forming device is large by surrounding the wind turbine blade with the booth.

The present disclosure has been made in view of such circumstances, and an object of the present disclosure is to provide a protective layer forming device and a method for operating a protective layer forming device, in which the entire protective layer forming device can be reduced in size.

### Solution to Problem

In order to solve the above problems, a protective layer forming device and a method for operating a protective layer forming device of the present disclosure adopt following means.

A protective layer forming device according to an aspect of the present disclosure is a protective layer forming device that forms a protective layer in a tip portion of a wind turbine blade main body formed of an FRP in a blade length direction and a construction range of a leading edge portion, the protective layer forming device including: a booth that surrounds a part of the wind turbine blade main body in the blade length direction of the construction range; a spray unit that is provided inside the booth and forms the protective layer by spraying a construction material to the construction range; a spray unit movement mechanism that relatively moves the spray unit with respect to the booth and moves the spray unit to a predetermined position where thermal spraying is performed on the construction range of the wind turbine blade main body; and a booth movement mechanism that moves the booth in the blade length direction of the wind turbine blade main body.

A method for operating a protective layer forming device according to an aspect of the present disclosure that forms a protective layer in a tip portion of a wind turbine blade main body formed of an FRP in a blade length direction and a construction range of a leading edge portion, in which the protective layer forming device includes a booth that surrounds a part of the wind turbine blade main body in the blade length direction of the construction range, and a spray unit that is provided inside the booth and forms the protective layer by spraying a construction material to the construction range, the method including: a spray unit moving step of relatively moving the spray unit with respect to the booth and moving the spray unit to a predetermined position where thermal spraying is performed on the construction range of the wind turbine blade main body; and a booth moving step of moving the booth in the blade length direction of the wind turbine blade main body.

### Advantageous Effects of Invention

According to the present disclosure, the entire protective layer forming device can be reduced in size.

### Brief Description of Drawings

Fig. 1 is a schematic configuration diagram showing a wind power generation device using a wind turbine blade according to an embodiment of the present disclosure.
Fig. 2 is a plan view showing the wind turbine blade.
Fig. 3 is a front view of the wind turbine blade of Fig. 2.
Figs. 4A and 4B are cross-sectional views of the wind turbine blade shown in Figs. 2 and 3.
Fig. 5 is a front view showing a state of installation of the wind turbine blade when a protective layer is formed.
Fig. 6 is a cross-sectional view at a support position in Fig. 5.
Fig. 7 is a partially enlarged front view showing a construction range of the protective layer formed at a tip of the wind turbine blade.
Fig. 8 is a partially enlarged front view showing the order of forming the protective layer.
Fig. 9 is a schematic perspective view showing a protective layer forming device of the present embodiment.
Fig. 10 is a partially enlarged cross-sectional view showing the protective layer forming device of the present embodiment and a forming direction of a protective layer in a blade thickness direction.
Fig. 11 is a view showing an opening provided in a booth of the protective layer forming device of the present embodiment.
Fig. 12 is a schematic perspective view showing the wind turbine blade and the protective layer forming device of the present embodiment.
Fig. 13 is a block diagram showing a control configuration of the protective layer forming device of the present embodiment.
Fig. 14 is a flowchart showing a control method for the protective layer forming device of the present embodiment.

### Description of Embodiments

Hereinafter, an embodiment according to the present disclosure will be described with reference to the drawings.

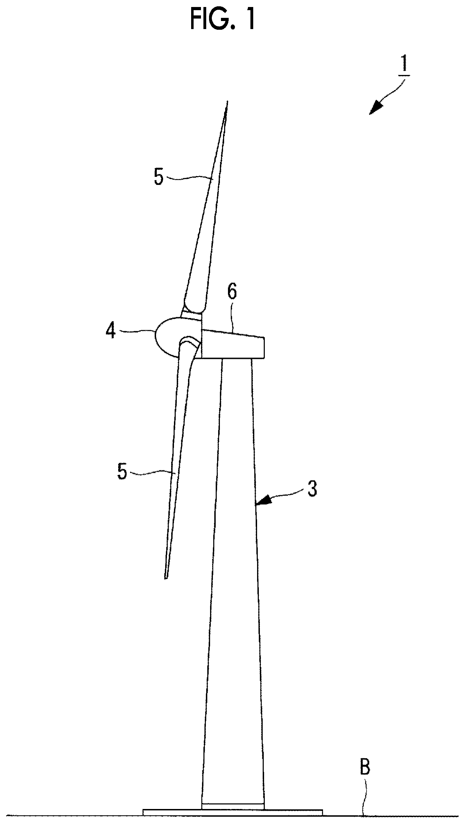

As shown in Fig. 1, a wind power generation device 1 has a tower 3 that is erected on an installation surface B, a nacelle 6 that is installed at an upper end of the tower 3, and a rotor head 4 that is rotatable around a substantially horizontal axis and that is provided in the nacelle 6.

A plurality of (for example, three) wind turbine blades 5 are attached to the rotor head 4 radially around a rotation axis thereof. Accordingly, the force of the wind that hits the wind turbine blade 5 in the direction of the rotation axis of the rotor head 4 is changed into power for rotating the rotor head 4 around the rotation axis. The obtained power is converted into electric power by a generator (not shown) and is supplied to the outside.

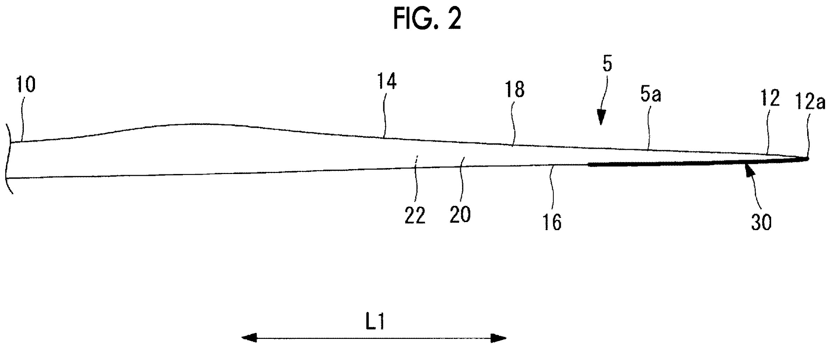

As shown in Fig. 2, the wind turbine blade 5 includes a blade root portion 10 that is attached to the rotor head 4, a blade tip portion (tip portion) 12 that is located farthest from the rotor head 4, and an airfoil portion 14 that extends between the blade root portion 10 and the blade tip portion 12. In Fig. 2, a blade length direction L1 is a horizontal direction.

The wind turbine blade 5 has a leading edge 16 and a trailing edge 18 from the blade root portion 10 to the blade tip portion 12. An outer shape of the wind turbine blade 5 is defined by a pressure-side surface 20 that is a pressure surface (positive pressure surface) and a suction-side surface 22 that is a negative pressure surface facing the pressure-side surface 20. The wind turbine blade 5 is formed of fiber-reinforced plastic (FRP). As the FRP, carbon fiber reinforced plastic (CFRP), glass fiber reinforced plastic (GFRP), or the like is used. An entire length of the wind turbine blade 5 from the blade root portion 10 to the blade tip portion 12 is 100 m class, for example, 80 m or more and 150 m or less. In addition, a wind turbine blade of 200 m class may be adopted as the wind turbine blade 5 of the present embodiment.

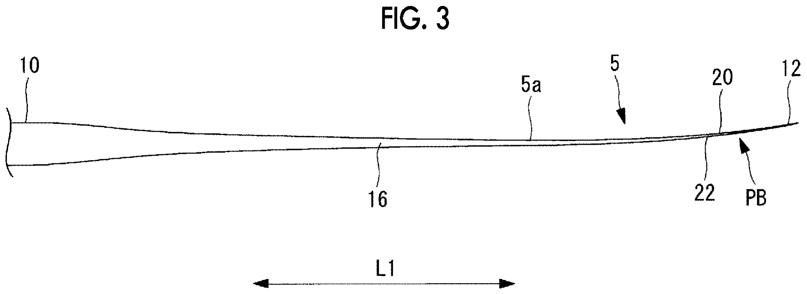

As shown in Fig. 3, the wind turbine blade 5 is provided with a pre-bend PB that is bent in advance on a blade tip portion 12 side. A bending amount of the pre-bend PB is determined in advance on the assumption that the wind turbine blade 5 receives a wind pressure during operation. Therefore, the pre-bend PB is bent such that the pressure receiving pressure-side surface 20 that receives the wind pressure and the suction-side surface 22 is protruded.

As shown in Fig. 2, a protective layer 30 is formed with respect to a wind turbine blade main body 5a in the blade tip portion 12 of the wind turbine blade 5 and in a predetermined region (leading edge portion) including the leading edge 16. A construction range of the protective layer 30 is indicated by a thick line in Fig. 2. The construction range of the protective layer 30 in the blade length direction L1 is 20 m to 40 m, preferably about 30 m, from a tip 12a of the blade tip portion 12. The construction range of the protective layer 30 is not limited thereto, and for example, in a region where a circumferential speed exceeds 90 m/s, the construction range is set to a range of approximately one-third of the entire length from the tip of the wind turbine blade 5. The protective layer 30 is made of a material having excellent wear resistance, such as a cermet or a cobalt (Co) alloy such as Co base alloy. The protective layer 30 is formed, for example, by high velocity oxy-fuel (HVOF).

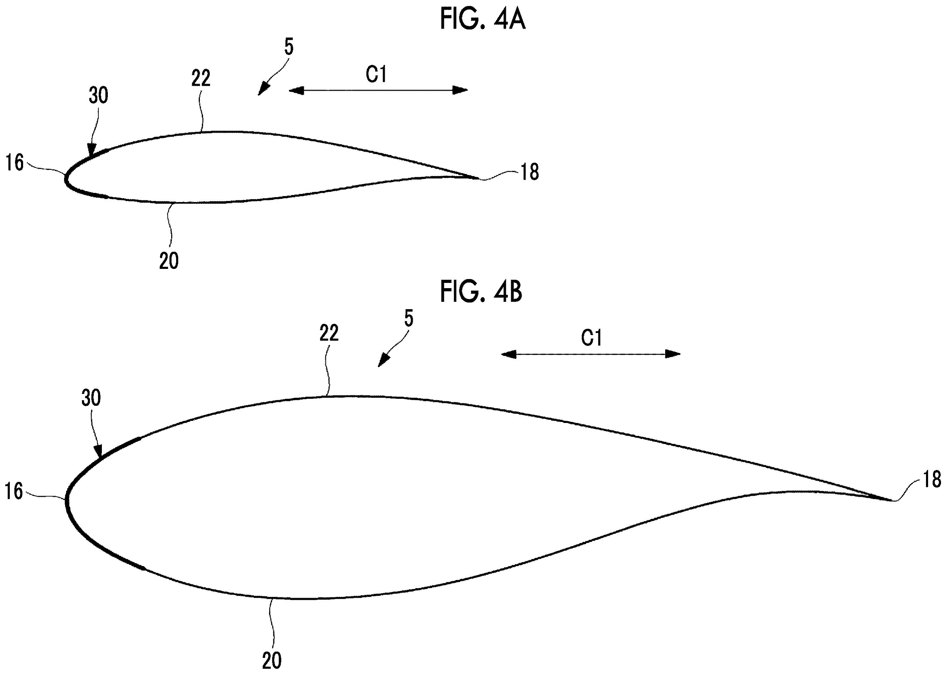

Figs. 4A and 4B show cross sections of the wind turbine blade 5. In the drawing, the horizontal direction indicates a blade chord direction (a code direction) C1. In a case where the entire length of the wind turbine blade 5 is R, Fig. 4A is a cross section at a position of 0.9R, and Fig. 4B is a cross section at a position of 0.7R.

The blade chord length (chord length) c in the cross section of Fig. 4A is about 1 m. A blade thickness ratio t/c in a case where a maximum thickness of the blade thickness is t is 18%.

The blade chord length c in the cross section of Fig. 4B is about 2 m, and the blade thickness ratio t/c is 25%.

As shown by thick lines in Figs. 4A and 4B, the protective layer 30 is formed from the pressure-side surface 20 to the suction-side surface 22 with the leading edge 16 interposed therebetween. The construction range of the protective layer 30 is determined in consideration of erosion of the wind turbine blade 5 due to raindrops or the like.

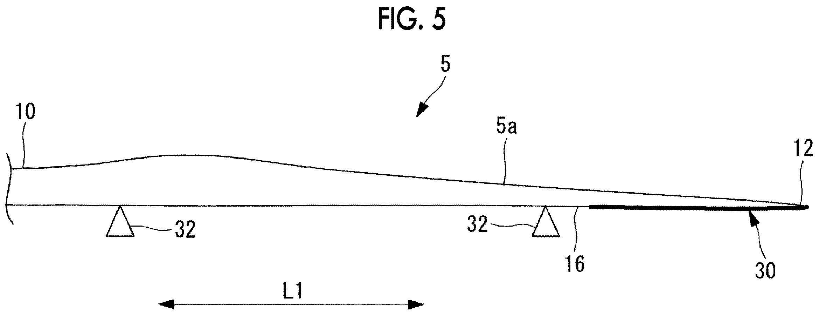

Next, a step of forming the protective layer 30 described above will be described. As shown in Fig. 5, after the outer shape of the wind turbine blade main body 5a of the wind turbine blade 5 is molded, the wind turbine blade 5 is installed in a posture in which the blade length direction L1 is substantially horizontal and the leading edge 16 faces downward (posture setting step). That is, the wind turbine blade main body 5a is installed in a vertical posture so that the blade chord direction C1 faces a substantially vertical direction. At this time, the wind turbine blade 5 is supported from below by a plurality of support platforms 32 provided at predetermined intervals in the blade length direction L1 (supporting step).

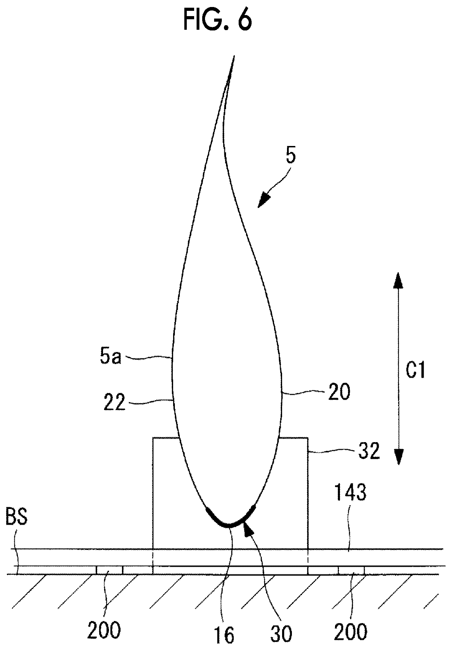

Fig. 6 shows that a leading edge 16 side of the wind turbine blade 5 is supported by the plurality of support platforms 32. Each support platform 32 is provided on an installation surface BS at the time of construction. The wind turbine blade 5 may be supported with the leading edge 16 side facing downward. For example, instead of the method of supporting the wind turbine blade 5 from below by the support platform 32 described above, the wind turbine blade 5 may be supported by a hanging member such as a wire hung from above the wind turbine blade 5 to hold and lift the leading edge 16 facing downward.

As shown in Figs. 5 and 6, in a state where the leading edge 16 is directed downward, a protective layer 30 is formed on the leading edge 16 of the wind turbine blade 5 by a protective layer forming device 100 (to be described later). The protective layer forming device 100 accelerates the construction material that is heated and melted or softened in a droplet or particle state by a transport gas and sprays the construction material onto the surface of the wind turbine blade main body 5a.

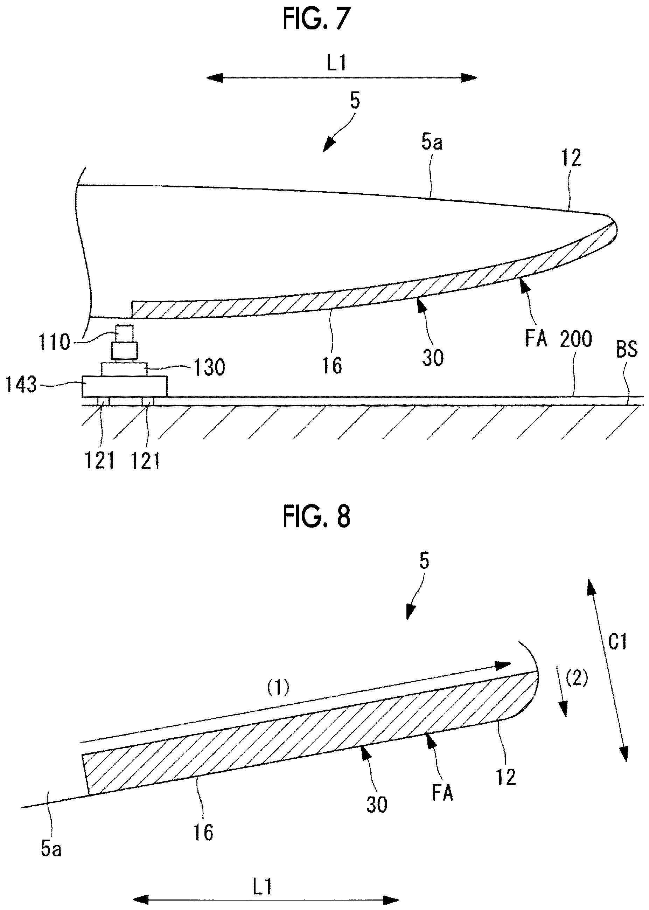

Fig. 7 shows a construction range FA in which the protective layer 30 is formed on the blade tip portion 12 of the wind turbine blade 5. As shown in the drawing, the protective layer 30 is formed in a predetermined range (leading edge portion) on the leading edge 16 side of the wind turbine blade 5.

As shown in Figs. 7 and 8, in the spraying work (for example, thermal spraying) when the protective layer 30 is formed, a spray unit 110 is reciprocated in the blade length direction L1 (direction indicated by (1) in the drawing) (first spraying step). As a result, the protective layers are laminated in a plurality of layers. A thickness of the protective layer 30 is, for example, about 500 µm to 600 µm. An irradiation width on the blade surface of the spray unit 110 is, for example, about 10 mm.

After the first spraying step, the position of the spray unit 110 is changed to spray at an adjacent position adjacent to the first spraying step in the blade chord direction C1 (direction shown in (2) in the drawing) (blade chord position changing step). Then, at the adjacent position, the spray unit 110 is reciprocated in the blade chord direction C1 (direction indicated by (1) in the drawing) in the blade length direction L1, and the spraying is performed in the same manner as in the first spraying step (second spraying step). In the first spraying step and the second spraying step, the protective layer 30 is formed by scanning the spray unit 110 to reciprocate in the blade length direction L1. This is because the change in curvature of the blade surface in the blade length direction L1 is smaller than that in the blade chord direction C1.

Fig. 8 is a partially enlarged cross-sectional view showing the protective layer forming device 100 of the present embodiment and a forming direction of the protective layer 30 in the blade chord direction C1. As shown in Fig. 8, the position change direction in the above-described blade chord position changing step is a direction from one blade surface (for example, the pressure-side surface 20) of the wind turbine blade 5 to the other blade surface (for example, the suction-side surface 22) via the leading edge 16, as indicated by an arrow in the drawing.

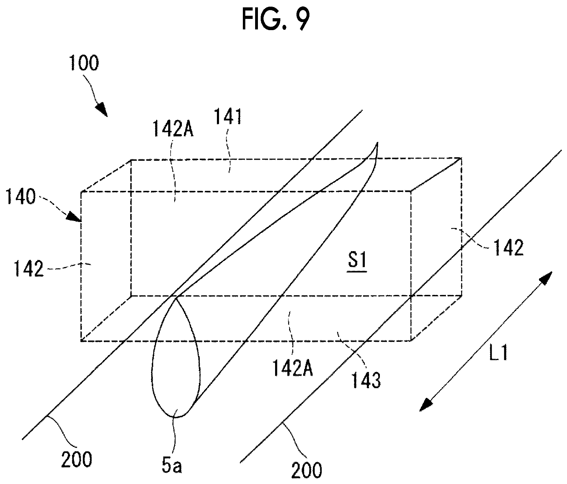

Next, the protective layer forming device 100 of the present embodiment will be described with reference to Figs. 9 to 14.

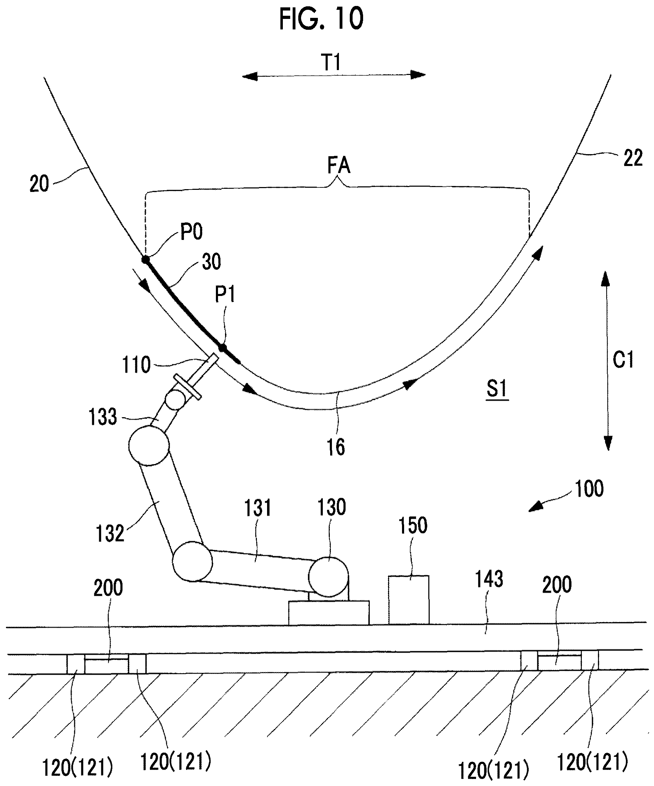

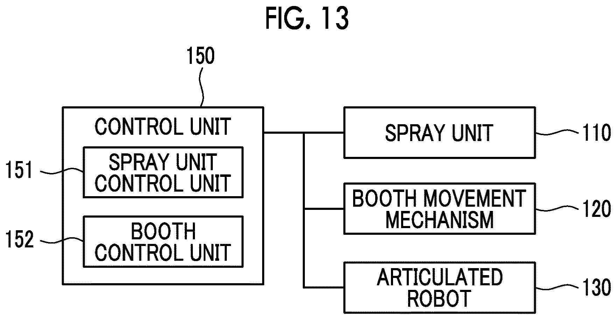

As shown in Figs. 9 and 10, The protective layer forming device 100 is a device that forms the protective layer 30 in the tip portion of the wind turbine blade main body 5a formed of an FRP in the blade length direction L1 and in the construction range (FA) of the leading edge portion. Fig. 13 is a block diagram showing a control configuration of the protective layer forming device 100 of the present embodiment.

As shown in Fig. 9, the protective layer forming device 100 includes a booth 140 that moves along a pair of rails 200 and surrounds a part of the wind turbine blade main body 5a. In addition, as shown in Fig. 10, the protective layer forming device 100 includes a spray unit 110 provided inside the booth 140, a booth movement mechanism 120, an articulated robot (spray unit movement mechanism) 130, and a control unit 150.

The spray unit 110 is provided inside the booth 140. The spray unit 110 is a device that sprays the construction material to the construction range FA with the transport gas to form the protective layer. In Fig. 10, the spray unit 110 sprays the construction material toward a spraying target point P1.

The booth movement mechanism 120 is a mechanism that moves the booth 140, which accommodates the spray unit 110 and the articulated robot 130 inside, in the blade length direction L1 (refer to Figs. 9 and the like) of the wind turbine blade main body 5a. The booth movement mechanism 120 moves in the blade length direction L1 along the rail 200 installed on the installation surface BS at the time of construction. The position of the booth movement mechanism 120 in the blade length direction L1 is controlled by the control unit 150.

The booth movement mechanism 120 has a plurality of wheels 121 that engage with the rail 200, a wheel adjustment unit (not shown) that adjusts a rotation speed and a rotation direction of the wheels 121, and a driving source (not shown) that rotationally drives the wheels 121. The wheels 121 are fixed to a lower surface of a bottom surface portion 143 of the booth 140. The adjustment unit is controlled by the control unit 150. The control unit 150 controls the wheel adjustment unit to adjust the movement distance, the movement direction, the movement speed, and the like of the booth 140 in the blade length direction L1.

The articulated robot 130 is a mechanism that is attached to the booth 140 and moves the spray unit 110 to any position in a three-dimensional space. Specifically, the articulated robot 130 moves the spray unit 110 by adjusting angles of arms 131, 132, and 133. As shown in Fig. 10, the articulated robot 130 adjusts the position of the spray unit 110 in the blade thickness direction T1 of the wind turbine blade main body 5a and the orientation of the spray unit 110 such that the construction direction (the direction in which the spray unit 110 sprays the construction material) of the spray unit 110 faces the construction range FA of the wind turbine blade main body 5a.

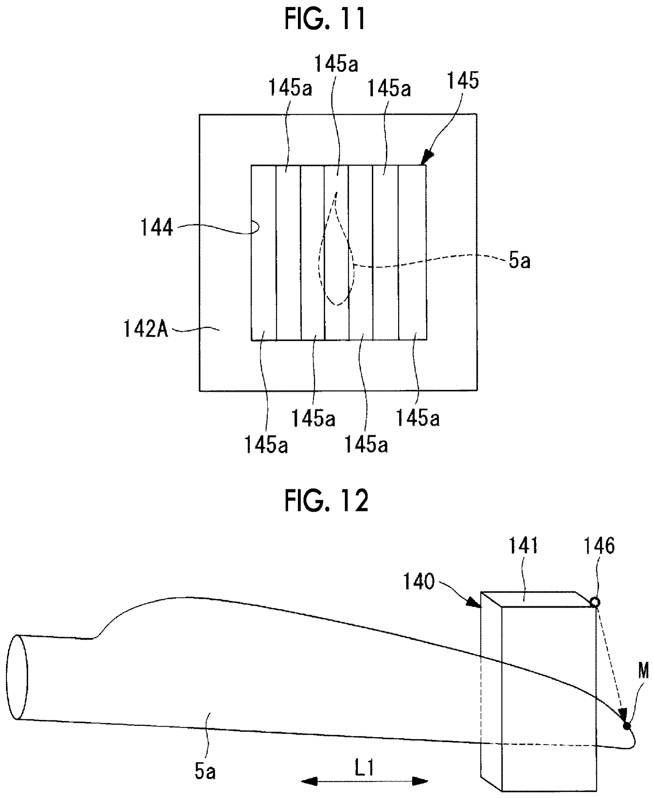

As shown in Figs. 9 and 12, the booth 140 surrounds a part of the wind turbine blade main body 5a in the blade length direction L1. As shown in Fig. 9, the booth 140 defines a construction space S1 inside. The construction space S1 is substantially sealed.

The booth 140 integrally has a ceiling portion 141 that defines an upper side of the construction space S1, four side wall portions 142 that define a side of the construction space S1, and a bottom surface portion 143 that defines a lower side of the construction space S1. The booth 140 has a rectangular parallelepiped shape.

A length of the booth 140 in the blade length direction L1 is, for example, approximately 5 m.

The ceiling portion 141 is a rectangular plate-shaped member, and an upper end of each side wall portion 142 is connected to the ceiling portion 141.

In addition, as shown in Fig. 10, the bottom surface portion 143 of the booth 140 is a rectangular plate-shaped member, and a lower end of each side wall portions 142 is connected to the bottom surface portion 143. An articulated robot 130 is fixed to an upper surface of the bottom surface portion 143. In addition, the control unit 150 is provided on the upper surface of the bottom surface portion 143 of the booth 140.

As shown in Fig. 11, an opening 144 through which the wind turbine blade main body 5a is inserted is formed in each of two side wall portions 142A that define the blade length direction L1, among the four side wall portions 142. A closing unit 145 that closes the opening 144 is provided in the opening 144. The closing unit 145 allows the insertion of the wind turbine blade main body 5a and closes a gap formed between the wind turbine blade main body 5a and an edge of the opening 144 as much as possible. For example, as shown in Fig. 12, the closing unit 145 may have a plurality of rubber members 145a extending in the blade chord direction C1, and the plurality of rubber members 145a may be hung to be arranged without a gap along the blade thickness direction T1.

In addition, the closing unit 145 may have a protrusion portion that protrudes from the edge of the opening 144 toward a center portion, like a shutter of a camera, and may close portions other than the center portion of the opening 144 by the protrusion portion.

As shown in Fig. 12, a sensor 146 that detects a plurality of reference marks (detection targets) M provided in the wind turbine blade main body 5a is provided on the ceiling portion 141 of the booth 140. The sensor 146 transmits a detection result to the control unit 150.

The reference mark M is provided at the tip of the wind turbine blade main body 5a. The plurality of (for example, two) reference marks M are provided to be arranged at predetermined intervals in the blade thickness direction T1 (depth direction of the paper surface of Fig. 12). The position where the reference mark M is provided and the number of reference marks M to be provided are not limited to the above description. For example, the reference mark M may be provided at a base end of the wind turbine blade main body 5a. In addition, the number of reference marks M to be provided may be one or may be three or more.

A camera (not shown) that images an irradiation status of the spray unit 110 is provided in the booth 140. The camera transmits a captured image to the control unit 150.

In addition, a dust collection device (not shown) that collects dust floating in the construction space S1 is provided in the booth 140.

As shown in Fig. 13, the control unit 150 is a device that controls the spray unit 110, the booth movement mechanism 120, and the articulated robot 130.

The control unit 150 (controller) includes, for example, a central processing unit (CPU, processor), a main memory, a secondary storage (memory), and the like. Further, the control unit 150 may include a communication unit for transmitting and receiving information to and from other devices.

The main memory is configured with, for example, a writable memory such as a cache memory or a random access memory (RAM), and is used as a work region performing reading of an execution program of the CPU, writing of processing data by the execution program, or the like.

The secondary storage is a non-transitory computer readable storage medium. The secondary storage is, for example, a magnetic disk, a magneto-optical disk, a CD-ROM, a DVD-ROM, a semiconductor memory, or the like.

As an example, a series of processes for implementing various functions is stored in the secondary storage in the form of a program, and the CPU reads the program into the main memory and executes a process of processing and calculating information to implement various functions. The program may be applied in various forms, such as being installed in advance in a secondary storage, provided in a state of being stored in a computer readable storage medium, or distributed via communication means using wired or wireless methods. The computer-readable storage medium is a magnetic disk, a magneto-optical disk, a CD-ROM, a DVD-ROM, a semiconductor memory, or the like.

The control unit 150 includes a spray unit control unit (first control unit) 151 that controls the articulated robot 130 such that a relative position of the spray unit 110 with respect to the wind turbine blade main body 5a is a predetermined position, based on the positions of the plurality of reference marks M detected by the sensor 146, and a booth control unit (second control unit) 152 that controls the booth movement mechanism 120 such that a relative position of the booth 140 with respect to the wind turbine blade main body 5a is a predetermined position, based on the positions of the plurality of reference marks M detected by the sensor 146.

The spray unit control unit 151 determines the position and the posture of the wind turbine blade main body 5a based on the positions of the plurality of reference marks M detected by the sensor 146. In that case, the spray unit control unit 151 may refer to data of the shape of the wind turbine blade main body 5a or the like stored in advance in the storage unit or the like. The spray unit control unit 151 controls the articulated robot 130 such that the relative position of the spray unit 110 with respect to the wind turbine blade main body 5a is a predetermined position, based on the position and the posture of the wind turbine blade main body 5a. The predetermined position is a position where the spray unit 110 can preferably perform a spraying treatment (for example, thermal spraying or the like) on the wind turbine blade main body 5a, and for example, may be a position facing a target spraying portion (a target portion to which the spray unit 110 performs spraying).

The booth control unit 152 determines the position and the posture of the wind turbine blade main body 5a based on the positions of the plurality of reference marks M detected by the sensor 146. In that case, the booth control unit 152 may refer to data of the shape of the wind turbine blade main body 5a or the like stored in advance in the storage unit or the like. The booth control unit 152 controls the booth movement mechanism 120 such that the relative position of the booth 140 with respect to the wind turbine blade main body 5a is a predetermined position, based on the position and the posture of the wind turbine blade main body 5a. The predetermined position may be, for example, a position where the target spraying portion is in the booth 140.

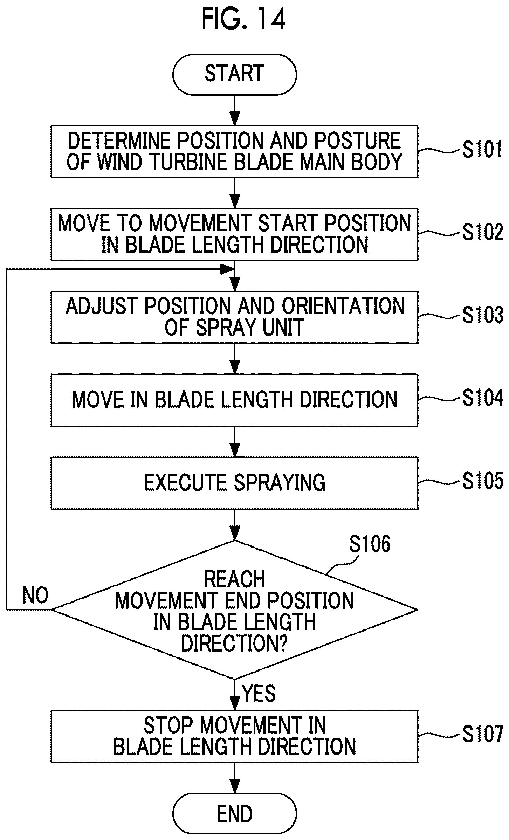

Hereinafter, an example of a process of the protective layer forming device 100 executed by the control unit 150 will be described with reference to Fig. 14. Fig. 14 is a flowchart showing an example of the processing of the protective layer forming device 100 of the present embodiment. Each processing in Fig. 14 is executed by the control unit 150 reading out a program stored in a storage unit (not shown).

In step S101, the control unit 150 determines the position and the posture of the wind turbine blade main body 5a based on the positions of the plurality of reference marks M detected by the sensor 146.

In step S102, the control unit 150 controls the booth movement mechanism 120 to move the protective layer forming device 100 to a movement start position in the blade length direction L1, based on the position and the posture of the wind turbine blade main body 5a determined in step S101 (booth moving step). The movement start position is, for example, a position of an end portion of the construction range FA on a blade root portion 10 side in the blade length direction L1 (position shown in Fig. 7) in a case where the protective layer 30 is formed from the blade root portion 10 side of the construction range FA toward the blade tip portion 12.

In step S103, the control unit 150 controls the articulated robot 130 to adjust the position and the orientation of the spray unit 110 based on the position and the posture of the wind turbine blade main body 5a determined in step S101 (spray unit moving step). The control unit 150 controls the spray unit 110 to be disposed at a desired position in the blade thickness direction T1 and the blade chord direction C1 by adjusting the angles of the arms 131, 132, and 133 shown in Fig. 10. When the construction is started, the control unit 150 controls the articulated robot 130 such that the spray unit 110 is disposed at a position P0 which is the start position in a forming direction.

In addition, the control unit 150 adjusts the orientation of the spray unit 110 of the wind turbine blade main body 5a of the spray unit 110 such that the construction direction of the spray unit 110 faces the construction range FA of the wind turbine blade main body 5a.

In step S104, the control unit 150 controls the booth movement mechanism 120 to move the spray unit 110 in the blade length direction L1.

In step S105, the control unit 150 operates the spray unit 110 to spray the construction material heated and melted or softened in a droplet or particle state onto the surface of the wind turbine blade main body 5a by the transport gas.

The spraying in step S105 is executed simultaneously with the movement of the spray unit 110 in step S104. That is, in steps S104 and S105, a step of moving the spray unit 110 in the blade length direction L1 of the wind turbine blade main body 5a and forming the protective layer 30 by the spray unit 110 is executed.

In step S106, the control unit 150 determines whether the spray unit 110 reaches a movement end position in the blade length direction L1. When the determination is YES, the processing proceeds to step S107, and when the determination is NO, the processing proceeds to step S103.

In step S107, since the spray unit 110 reaches the movement end position in the blade length direction L1, the control unit 150 controls the booth movement mechanism 120 to stop the movement of the spray unit 110 in the blade length direction L1, and ends the processing of the present flowchart.

According to the present embodiment, the following actions and effects are exhibited.

In the present embodiment, the booth 140 that surrounds a part of the wind turbine blade main body 5a in the blade length direction L1 of the construction range FA, and the spray unit 110 that is provided inside the booth 140 and sprays the construction material to the construction range FA to form the protective layer are provided. Accordingly, the spraying (for example, thermal spraying) can be performed on the construction range FA of the wind turbine blade main body 5a inside the booth 140. Since the spraying is performed inside the booth 140, dust (for example, powdery thermal spraying material) that is scattered when the spraying is performed can be suppressed by the booth 140. Therefore, the diffusion of dust can be suppressed.

In addition, in the present embodiment, the booth 140 that surrounds a part of the wind turbine blade main body 5a in the blade length direction L1 of the construction range FA is provided. Accordingly, the booth 140 can be reduced in size as compared with a case where the booth 140 that surrounds the entire wind turbine blade main body 5a is provided. Therefore, the entire protective layer forming device 100 can be reduced in size.

In addition, in the present embodiment, the booth movement mechanism 120 that moves the booth 140 in the blade length direction L1 of the wind turbine blade main body 5a is provided. Accordingly, the spraying can be performed on the entire area of the wind turbine blade main body 5a in the blade length direction L1 of the construction range FA by moving the booth 140.

As a method for performing the spraying on the entire area of the wind turbine blade main body 5a in the blade length direction L1 of the construction range FA, a method for moving the wind turbine blade main body 5a is also conceivable. However, in a case where the large wind turbine blade main body 5a is moved, the movement device is large and complicated. For this reason, there is a possibility that the spraying work may be complicated. On the other hand, in the present embodiment, since the booth 140 is moved, precision spraying can be performed without moving the wind turbine blade main body 5a.

In addition, in the present embodiment, the spray unit control unit 151 that controls the articulated robot 130 such that the relative position of the spray unit 110 with respect to the wind turbine blade main body 5a is a predetermined position based on the position of the reference mark M detected by the sensor 146 is provided. Accordingly, the spray unit 110 can be moved based on the reference mark M provided on the wind turbine blade main body 5a on which the thermal spraying is actually performed. Therefore, the spray unit 110 can be moved more accurately. Therefore, the quality of the wind turbine blade main body 5a can be improved.

In particular, in a case where the wind turbine blade main body 5a which is a target to be sprayed is large, it is difficult to accurately fix the wind turbine blade main body 5a at a required position. In such a case, it is difficult to accurately move the spray unit 110 to a desired position, and thus it is difficult to perform spraying under precise conditions such as changing the thickness of the layer depending on the position.

On the other hand, in the present embodiment, the position and the posture of the fixed wind turbine blade main body 5a are determined, and the spray unit 110 is moved based on the determination. Therefore, even in the case of the large wind turbine blade main body 5a, the spray unit 110 can be accurately moved. In addition, even when the wind turbine blade main body 5a is fixed at the spraying position, the wind turbine blade main body 5a may be roughly fixed. Therefore, the fixing work of the wind turbine blade main body 5a can be simplified.

In addition, in the present embodiment, the booth control unit 152 that controls the booth movement mechanism 120 is provided such that the relative position of the booth 140 with respect to the wind turbine blade main body 5a is a predetermined position based on the position of the reference mark M detected by the sensor 146. Accordingly, the booth 140 can be moved based on the reference mark M provided on the wind turbine blade main body 5a on which the spraying is actually performed. Therefore, the booth 140 can be moved more accurately. Therefore, the quality of the wind turbine blade main body 5a can be improved.

In addition, when the spray unit 110 performs the spraying, dust (for example, the powdery construction material) scatters. The scattered dust floats in the booth 140.

In the present embodiment, a dust collection device that collects dust inside the booth 140 is provided. Accordingly, dust floating inside the booth 140 can be collected.

In addition, in the present embodiment, since the booth 140 can be reduced in size as described above, a space in which the dust collection device collects dust can be reduced. Therefore, dust can be more effectively collected. In addition, since dust can be sufficiently collected even by the dust collection device having low dust collection capacity by reducing the size of the booth 140, the dust collection device can be reduced in size. Therefore, the entire protective layer forming device 100 can be reduced in size.

The present disclosure is not limited to the above embodiments, and can be appropriately modified within a scope which does not depart from the gist of the present disclosure.

In the above embodiments, an example in which the spray unit 110 is fixed to the booth 140 has been described, but the present disclosure is not limited thereto. For example, the spray unit 110 and the booth 140 may not be fixed to each other and may be independently moved. In this case, a detection unit that detects the relative position between the spray unit 110 and the booth 140 is provided, and the spray unit 110 is moved as follows.

First, the relative position between the wind turbine blade main body 5a and the booth 140 is detected by a sensor provided in the booth 140. Next, the detection result is corrected based on the detection result (the relative position between the spray unit 110 and the booth 140) detected by the detection unit, and the relative position between the wind turbine blade main body 5a and the spray unit 110 is derived. The articulated robot 130 moves the spray unit 110 to a predetermined position, based on the relative position between the wind turbine blade main body 5a and the spray unit 110 that is derived.

In addition, in the above embodiments, a case where the booth movement mechanism 120 moves along the rail 200 is described, but the present disclosure is not limited thereto. For example, the booth movement mechanism 120 may be automatically guided by a magnetic tape, a magnetic marker, or the like installed on the installation surface BS at the time of construction, like an automatic guided vehicle (AGV).

In addition, in the above embodiments, an example is described in which the spraying is performed in a state where the wind turbine blade main body 5a is installed in a vertical posture so that the blade chord direction C1 faces a substantially vertical direction, but the present disclosure is not limited thereto. For example, the spraying may be performed in a state where the wind turbine blade main body 5a is installed in a horizontal posture so that the blade chord direction C1 faces a substantially horizontal direction. In this case, the rail 200 may be inclined with respect to the horizontal plane along a bending amount of the pre-bend PB (refer to Fig. 3) of the wind turbine blade main body 5a. That is, as shown in Fig. 3, in a case where the wind turbine blade main body 5a is installed in a horizontal posture so that the tip portion of the pre-bend PB (refer to Fig. 3) is located above the base end portion, the rail 200 may also be inclined such that the tip portion is located above.

The protective layer forming device and the method for operating a protective layer forming device described in the embodiments described above are understood as follows, for example.

In addition, the protective layer forming device according to a first aspect of the present disclosure is a protective layer forming device (100) that forms a protective layer in a tip portion of a wind turbine blade main body (5a) formed of an FRP in a blade length direction and a construction range (FA) of a leading edge portion, the protective layer forming device (100) including: a booth (140) that surrounds a part of the wind turbine blade main body in the blade length direction of the construction range; a spray unit (110) that is provided inside the booth and forms the protective layer by spraying a construction material to the construction range; a spray unit movement mechanism (130) that relatively moves the spray unit with respect to the booth and moves the spray unit to a predetermined position where spraying is performed on the construction range of the wind turbine blade main body; and a booth movement mechanism (120) that moves the booth in the blade length direction of the wind turbine blade main body.

In the above configuration, the booth that surrounds a part of the wind turbine blade main body in the blade length direction of the construction range, and the spray unit that is provided inside the booth and sprays the construction material to the construction range to form the protective layer are provided. Accordingly, the spraying can be performed inside the booth on the construction range of the wind turbine blade main body. Since the spraying is performed inside the booth, dust (for example, a powdery construction material) that scatters when the spraying is performed can be suppressed by the booth. Therefore, the diffusion of dust can be suppressed.

In addition, in the above configuration, the booth that surrounds a part of the wind turbine blade main body in the blade length direction of the construction range is provided. Accordingly, the booth can be reduced in size as compared to a case where the booth that surrounds the entire wind turbine blade main body is provided. Therefore, the entire protective layer forming device can be reduced in size.

In addition, in the above configuration, the booth movement mechanism that moves the booth in the blade length direction of the wind turbine blade main body is provided. Accordingly, the booth can be moved to perform the spraying over the entire area of the wind turbine blade main body in the blade length direction of the construction range.

In addition, in the first aspect, the protective layer forming device according to a second aspect of the present disclosure includes a sensor (146) that is provided in the booth and detects a position of a detection target (M) provided in the wind turbine blade main body, and a first control unit (151) that controls the spray unit movement mechanism such that a relative position of the spray unit with respect to the wind turbine blade main body is a predetermined position, based on the position of the detection target detected by the sensor.

In the above configuration, the first control unit that controls the spray unit movement mechanism such that the relative position of the spray unit with respect to the wind turbine blade main body is a predetermined position, based on the position of the detection target detected by the sensor is provided. Accordingly, the spray unit can be moved based on the detection target provided in the wind turbine blade main body on which the spraying is actually performed. Therefore, the spray unit can be moved more accurately. Therefore, the quality of the wind turbine blade main body can be improved.

In addition, in the first or second aspect, the protective layer forming device according to a third aspect of the present disclosure further includes a sensor (146) that is provided in the booth and detects a position of a detection target (M) provided in the wind turbine blade main body, and a second control unit (152) that controls the booth movement mechanism such that a relative position of the booth with respect to the wind turbine blade main body is a predetermined position, based on the position of the detection target detected by the sensor.

In the above configuration, the second control unit that controls the booth movement mechanism such that the relative position of the booth with respect to the wind turbine blade main body is a predetermined position, based on the position of the detection target detected by the sensor is provided. Accordingly, the booth can be moved based on the detection target provided in the wind turbine blade main body on which the spraying is actually performed. Therefore, the booth can be moved more accurately. Therefore, the quality of the wind turbine blade main body can be improved.

In addition, in any one of the first to third aspects, the protective layer forming device according to a fourth aspect of the present disclosure further includes a dust collection device that collects dust inside the booth.

In the above configuration, the dust collection device that collects dust inside the booth is provided. Accordingly, dust floating inside the booth can be collected.

In addition, in the above configuration, since the booth can be reduced in size as described above, a space in which the dust collection device collects dust can be reduced. Therefore, dust can be more effectively collected. In addition, since dust can be sufficiently collected even by the dust collection device having low dust collection capacity by reducing the size of the booth, the dust collection device can be reduced in size. Therefore, the entire protective layer forming device can be reduced in size.

In addition, a method for operating the protective layer forming device according to the first aspect of the present disclosure is a method for operating the protective layer forming device (100) that forms a protective layer in a tip portion of a wind turbine blade main body (5a) formed of an FRP in a blade length direction and a construction range (FA) of a leading edge portion, in which the protective layer forming device includes a booth (140) that surrounds a part of the wind turbine blade main body in the blade length direction of the construction range, and a spray unit (110) that is provided inside the booth and forms the protective layer by spraying a construction material to the construction range, the method including: a spray unit moving step of relatively moving the spray unit with respect to the booth and moving the spray unit to a predetermined position where spraying is performed on the construction range of the wind turbine blade main body; and a booth moving step of moving the booth in the blade length direction of the wind turbine blade main body.

### Reference Signs List

1: wind power generation device
3: tower
4: rotor head
5: wind turbine blade
5a: wind turbine blade main body
6: nacelle
10: blade root portion
12: blade tip portion
12a: tip
14: airfoil portion
16: leading edge
18: trailing edge
20: pressure-side surface
22: suction-side surface
30: protective layer
32: support platform
100: protective layer forming device
110: spray unit
120: booth movement mechanism
121: wheel
130: articulated robot (spray unit movement mechanism)
131: arm
132: arm
133: arm
140: booth
141: ceiling portion
142: side wall portion
142A: side wall portion
143: bottom surface portion
144: opening
145: closing unit
145a: member
146: sensor
150: control unit
151: spray unit control unit
152: booth control unit
200: rail
B: installation surface
BS: installation surface at time of construction
C1: blade chord direction
FA: construction range
L1: blade length direction
M: reference mark
PB: pre-bend
S1: construction space
T1: blade thickness direction

## Claims

1. A protective layer forming device that forms a protective layer in a tip portion of a wind turbine blade main body formed of an FRP in a blade length direction and a construction range of a leading edge portion, the protective layer forming device comprising:
a booth that surrounds a part of the wind turbine blade main body in the blade length direction of the construction range;
a spray unit that is provided inside the booth and forms the protective layer by spraying a construction material to the construction range;
a spray unit movement mechanism that relatively moves the spray unit with respect to the booth and moves the spray unit to a predetermined position where spraying is performed on the construction range of the wind turbine blade main body; and
a booth movement mechanism that moves the booth in the blade length direction of the wind turbine blade main body.

2. The protective layer forming device according to Claim 1, further comprising:
a sensor that is provided in the booth and detects a position of a detection target provided in the wind turbine blade main body; and
a first control unit that controls the spray unit movement mechanism such that a relative position of the spray unit with respect to the wind turbine blade main body is a predetermined position, based on the position of the detection target detected by the sensor.

3. The protective layer forming device according to Claim 1, further comprising:
a sensor that is provided in the booth and detects a position of a detection target provided in the wind turbine blade main body; and
a second control unit that controls the booth movement mechanism such that a relative position of the booth with respect to the wind turbine blade main body is a predetermined position, based on the position of the detection target detected by the sensor.

4. The protective layer forming device according to Claim 1, further comprising:
a dust collection device that collects dust inside the booth.

5. A method for operating a protective layer forming device that forms a protective layer in a tip portion of a wind turbine blade main body formed of an FRP in a blade length direction and a construction range of a leading edge portion, in which the protective layer forming device includes a booth that surrounds a part of the wind turbine blade main body in the blade length direction of the construction range, and a spray unit that is provided inside the booth and forms the protective layer by spraying a construction material to the construction range, the method comprising:
a spray unit moving step of relatively moving the spray unit with respect to the booth and moving the spray unit to a predetermined position where spraying is performed on the construction range of the wind turbine blade main body; and
a booth moving step of moving the booth in the blade length direction of the wind turbine blade main body.
